# EUROPÄISCHE PATENTANMELDUNG

(11) **EP 2 058 953 A2**
(43) Veröffentlichungstag der Anmeldung: **13.05.2009**
(21) Anmeldenummer: 08017693.6
(22) Anmeldetag: 09.10.2008
(51) Int. Cl.: H04B 3/52, H01P 3/14

(54) **Übertragungs- und Verbindungssysteme für den Einsatz in mechanisch stark belasteter Umgebung**

(30) Priorität: 09.11.2007 DE 102007053497
(71) Anmelder: Hirschmann Automation and Control GmbH, 72654 Neckartenzlingen (DE)
(72) Erfinder: Dreher, Andreas, 70794 Filderstadt (DE)
(74) Vertreter: Thul, Hermann

(57) **Zusammenfassung**

Die Erfindung betrifft. Eine Funkübertragungseinrichtung, ausgebildet zum Übertragen von Signalen zwischen zwei Einheiten (1,2) über Funk, wobei jede Einheit (1, 2) jeweils eine Funkeinrichtung (3, 4) mit jeweils einer Antenne (5, 6) aufweist, wobei die Signale von der Antenne (5) der einen Einheit (1) ausgesendet und von der Antenne (6) der anderen Einheit (2) empfangen werden und/oder umgekehrt, wobei erfindungsgemäß vorgesehen ist, dass zwischen den beiden Einheiten (1, 2) ein Hohlleiter (7) vorgesehen ist, wobei die Antennen (5, 6) innerhalb des Hohlleiters (7) angeordnet sind und die Übertragung von der einen Antenne (5) und/oder der anderen Antenne (6) ausgesandten Signale innerhalb des Hohlleiters (7) erfolgt, wobei weiterhin der Hohlleiter (7) als flexibler Hohlleiter ausgebildet ist und der Hohlleiter (7) an zumindest einer Einheit (1, 2), vorzugsweise an beiden Einheiten (1, 2), oder an einer beliebigen Stelle zwischen den Einheiten(1, 2) über eine lösbare Verbindung (8, 9) befestigt ist.

## Beschreibung

Die Erfindung betrifft eine Funkübertragungseinrichtung, ausgebildet zum Übertragen von Signalen zwischen zwei Einheiten über Funk, gemäß den Merkmalen des Oberbegriffes des Patentanspruches 1.

Stand der Technik sind Einheiten, die zwecks Datenaustauschs miteinander verbunden werden müssen. Ein typisches Beispiel hierfür ist, wovon im Folgenden ausgegangen wird, eine Kommunikationsverbindung zwischen Eisenbahnwaggons.

Hierbei ist es erforderlich, dass ein Übertragungs- und Verbindungssystem in mechanisch anspruchsvoller und stark belasteter Umgebung, welches hoch zuverlässig arbeiten muss und einfach zu handhaben sein muss, bereit zu stellen ist.

Die einfache Anordnung beispielsweise von Buchsen an der Stirnseite eines jeden Eisenbahnwaggons, in welche eine Datenleitung eingesteckt wird, führt aufgrund der äußeren mechanischen und witterungsbedingten Einflüsse nicht zu dem gewünschten Erfolg. Darauf aufbauend könnte man daran denken, dass große und robuste elektrische Steckverbinder zum Einsatz kommen, die allerdings für hohe Datenraten (vorzugsweise größer gleich 100 Megabit pro Sekunde) nicht geeignet sind, da bei diesen Datenraten aus übertragungstechnischen Gründen die Stecker möglichst klein sein müssen, um die gewünschten Übertragungseigenschaften (Impedanz Anpassung, Verhinderung von Übersprechen und dergleichen) klein sein müssen. Außerdem stellt die Verschmutzung bei der Kontaktierung ein sehr großes Problem dar, sodass nicht in allen Fällen Kontaktsicherheit gewährleistet ist.

Zur Vermeidung dieser Probleme ist schon daran gedacht worden, ein drahtloses Übertragungsverfahren für die Übertragung der Signale zwischen den Eisenbahnwaggons einzusetzen.

Optische Übertragungsverfahren scheiden deshalb aus, da mit ihnen gerade infolge von extremen Witterungsbedingungen (wie starker Regen oder Schneefall) die gewünschte zuverlässige Datenübertragung zwischen den Eisenbahnwaggons nicht realisiert werden kann.

Daher hat es sich herausgestellt, dass die Übertragung der Signale über Funk eine gute Basis für die Datenübertragung darstellt. Denn zum einen erfolgt die Datenübertragung über Funk mit den erforderlichen hohen Datenraten, wobei die Funkdatenübertragung weiterhin durch entsprechende Kodierungen abhörsicher ist und auch durch extreme Umweltbelastungen (wie schon der geschilderte starke Regenfall, Schneefall, aber auch Verschmutzungen) keine Beeinträchtigung für die Datenübertragung darstellen.

Allerdings hat sich herausgestellt, dass auch solche Funkübertragungseinrichtungen, bei denen jeweils ein Waggon eine Antrenne aufweist, wobei über die Antennen Daten ausgesendet und empfangen werden, nicht immer zuverlässig funktioniert. Denn beim Ankoppeln von zwei Eisenbahnwaggons miteinander muss sichergestellt werden, dass die Funkübertragungseinrichtung des einen Eisenbahnwaggons die Funkübertragungseinrichtung des anderen Eisenbahnwaggons erkennt, sodass eine Datenübertragung nur zwischen diesen beiden Eisenbahnwaggons durchgeführt wird. Befindet sich aber mindestens ein weiterer Eisenbahnwaggon in der Nähe der beiden miteinander zu koppelnden Eisenbahnwaggons, besteht das Problem, dass nicht die beiden Eisenbahnwaggons, die miteinander gekoppelt werden sollen, auch miteinander kommunizieren, sondern der Fehlerfall eintritt, dass einer der zu koppelnden Eisenbahnwaggons mit dem zumindest einen weiteren Eisenbahnwaggon kommuniziert, mit dem allerdings gar nicht kommuniziert werden soll. Gleiches gilt für die Situation, wenn sich zwei miteinander gekoppelte und miteinander kommunizierende Eisenbahnwaggons im Bahnhof oder auf freier Strecke mit anderen vergleichbar ausgestatteten Eisenbahnwaggons begegnen, sodass auch dort die Gefahr gegeben ist, dass Eisenbahnwaggons miteinander kommunizieren, mit nicht miteinander kommunizieren sollen, weil sie nicht miteinander gekoppelt sind.

Der Erfindung liegt daher die Aufgabe zugrunde, eine Funkübertragungseinrichtung bereit zu stellen, die die eingangs geschilderten Nachteile vermeidet und mit der eine zuverlässige und eindeutige Datenübertragung zwischen zwei Einheiten aufgebaut und betrieben werden kann.

Diese Aufgabe ist durch die Merkmale des Patentanspruches 1 gelöst.

Erfindungsgemäß ist zunächst vorgesehen, dass zwischen den beiden Einheiten ein Hohlleiter vorgesehen ist, wobei die Antennen innerhalb des Hohlleiters angeordnet sind und die Übertragung der von der einen Antenne und/oder der anderen Antenne ausgesandten Signale innerhalb des Hohlleiters erfolgt.

Die Anordnung der Antennen innerhalb des Hohlleiters und die Datenübertragung innerhalb des Hohlleiters haben mehrere Vorteile.

Zum einen sind die Antennen vor mechanischen und Umwelteinflüssen geschützt, wobei eventuelle Verschmutzungen innerhalb des Hohlleiters sich nur in geringem Umfang auf die Funkübertragung auswirken, wobei dies mit einer entsprechend großen Systemreserve (Abstrahlleistung) bei der Funkübertragung sicher kompensiert werden kann. Außerdem ist der Vorteil gegeben, dass durch den Hohlleiter sicher gestellt ist, dass die Datenübertragung gezielt nur zwischen den beiden Antennen stattfindet, sodass Störeinflüsse von außen, wie z. B. durch andere Funksysteme oder auch gezielte Beeinflussungsversuche, wirksam verhindert werden. Außerdem wird die Abhörsicherheit verbessert, da der Hohlleiter eine wirksame Abschirmung der übertragenen Signale gegenüber der Außenwelt gewährleistet.

Das bedeutet, dass die Datenübertragungsstrecke der Funkübertragungseinrichtung gegen alle Umwelteinflüsse sorgsam geschützt werden kann, sodass diese Funkübertragungseinrichtung hinsichtlich ihrer mechanischen und übertragungstechnischen Eigenschaften deutlich verbessert ist.

In Kombination dazu ist der Hohlleiter als flexibler Hohlleiter ausgebildet. Hierzu kann der Hohlleiter beispielsweise aus einem Wellrohr aus Metall oder aus einen starren oder elastisch verformbaren Material mit einer Abschirmung bestehen. Vorzugsweise ist der flexible Hohlleiter als flexibles Kunststoffrohr aufgeführt, welches an den Innenflächen (und/oder der äußeren Oberflächen) metallisiert ist. Alternativ kommt auch beispielsweise eine Art Gummischlauch in Betracht, der mit einem Abschirmgeflecht versehen ist. Die Ausgestaltung des Hohlleiters als flexibler Hohlleiter hat den Vorteil, dass Distanzänderungen oder Bewegungen zwischen den beiden Einheiten ausgeglichen werden können.

In weiterer Kombination dazu ist der Hohlleiter an mindestens einer Stelle, dies kann an einer Einheit, an beiden Einheiten oder an beliebiger Stelle dazwischen über eine lösbare Verbindung befestigt. Diese lösbare Befestigung kann eine Steck- oder Schraub- oder Rastverbindung sein. Durch diese einfachsten Mechanismen wird der Hohlleiter an die Einheiten bzw. an deren Funkeinrichtung angeschlossen, wobei dies schnell und zuverlässig auch bei widrigen Umgebungsbedingungen wie Regen, Schneefall, Frost und dergleichen einfach durchgeführt werden kann. Außerdem kann es durch die Vermeidung jeglicher elektrischer Kontakte zu keinen Kontaktproblemen, Verschmutzungen oder Beschädigungen von empfindlichen Teilen kommen, da die Datenübertragung wirksam über Funk ausgeführt wird und lediglich der robuste Hohlleiter zum Beispiel an den Einheiten angekoppelt werden muss.

Die Übertragung der Signale über Funk kann beispielsweise mit einem WLAN-System, einem UWB-System oder einem sonstigen funkgestützten Übertragungsverfahren erfolgen, wobei diese Aufzählung nur beispielhaft und nicht abschließend ist. Insbesondere beim Einsatz zur Kommunikation zwischen zwei Eisenbahnwaggons können die Funksysteme in Schutzklasse IP 67 ausgeführt werden.

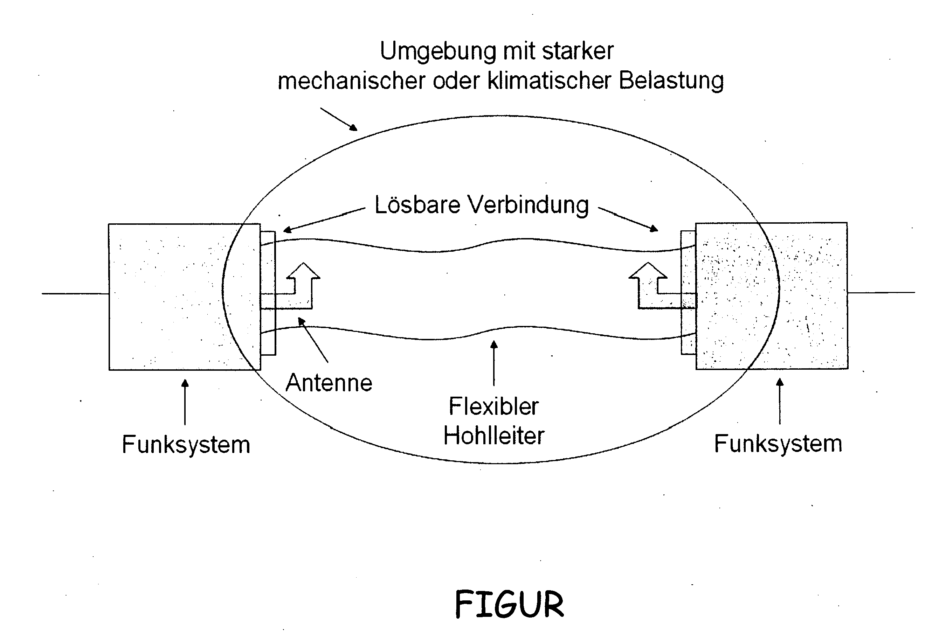

Ein Ausführungsbeispiel der Erfindung anhand zweier Eisenbahnwaggons, die miteinander gekoppelt werden, ist im Folgenden beschrieben und anhand der Figur erläutert.

Die Figur zeigt, soweit im Einzelnen dargestellt, als zwei Einheiten 1 und 2 mobile Einheiten in Form von Eisenbahnwaggons (prinzipiell dargestellt), an deren Stirnseite jeweils eine Funkeinrichtung 3, 4 angeordnet ist. Diese Funkeinrichtungen 3, 4 befinden sich beispielsweise in der Nähe der Kupplungsvorrichtung, mit der die beiden Einheiten 1, 2 miteinander auf Distanz verkuppelt werden. Die beiden Funkeinrichtungen 3, 4 sind mit jeweils einer Antenne 5, 6 ausgestattet, wobei die beiden Antennen 5, 6 sowohl als Sende- als auch als Empfangsantennen ausgebildet sind und die Datenkommunikation zwischen den beiden Einheiten 1, 2 über Funk erfolgt. Welche Daten dabei über die Antennen 5, 6 übertragen werden, ist für die Erfindung unerheblich. Das können beispielsweise Daten sein, die den Betrieb der Eisenbahnwaggons an sich betreffen oder die die Informationen für die Fahrgäste betreffen. Das bedeutet, dass in den Funkeinrichtungen 3, 4 entsprechende Mittel vorhanden sind, die die auszusendenden Daten aufbereiten, damit sie über die eine Antenne 5, 6 abgestrahlt werden können und die ebenso dazu ausgebildet sind, die von einer Antenne 5, 6 empfangenen Signale für die weitere Verarbeitung in dem Eisenbahnwaggon, in dem sie empfangen worden sind, aufzubereiten. Rein beispielhaft sei erwähnt, dass jeweils eine Funkeinrichtung 3, 4 dazu ausgerüstet ist, über eine Ethernet-Verbindung mit dem Eisenbahnwaggon - eigenen Datenübertragungssystem verbunden zu werden.

Erfindungsgemäß ist vorgesehen, dass zwischen den beiden Einheiten 1, 2 ein Hohlleiter 7 vorgesehen ist, wobei die Antennen 5, 6 innerhalb des Hohlleiters 7, vorzugsweise jeweils an einem Ende innerhalb des Hohlleiters 7, angeordnet sind und die Übertragung der von der Antenne 5 und/oder der Antenne 6 ausgesandten Signale innerhalb des Hohlleiters 7 erfolgt. Der Hohlleiter 7 ist über eine lösbare Verbindung 8, 9 an der jeweiligen Funkeinrichtung 3, 4 (oder alternativ an der Stirnseite der Einheit 1, 2, in der Figur nicht dargestellt) befestigt. Beispielsweise kann der flexible Hohlleiter 7 einfach über einen Flansch an der Funkeinrichtung 3, 4 (oder alternativ an der Stirnseite der Einheit 1, 2) angeschraubt oder verrastet werden. Durch diese einfache Verbindungstechnik des Hohlleiters 7 mit der Funkeinrichtung 3, 4 (oder der Einheit 1, 2) kann die Anbringung und Entfernung des Hohlleiters 7 auch bei widrigen Umgebungsbedingungen einfach und ohne spezielle Kenntnisse durchgeführt werden. Wichtig bei der Anbringung des Hohlleiters 7 ist, dass die Funkübertragungsstrecke zwischen den beiden Antennen 5, 6 innerhalb des Hohlleiters 7 sich befindet, sodass Störeinflüsse von außen, wie z. B. durch andere Funksysteme, und auch die Abstrahlung dieser Funkübertragungseinrichtung in Richtung anderer Funkübertragungseinrichtungen verhindert wird.

Bei der Ausgestaltung der Funkübertragungseinrichtung gemäß der Figur kann der Hohlleiter 7 beispielsweise auch einen so großen Innenquerschnitt (z. B. bei einem runden Hohlleiter einen so großen Innendurchmesser) aufweisen, dass er sich nicht nur über die Antennen 5, 6 (wie dargestellt) erstreckt, sondern auch über die Funkeinrichtungen 3, 4 erstreckt und durch die entsprechend ausgestaltete lösbare Verbindung 8, 9 an der Stirnseite der Einheiten 1, 2 befestigt wird. Außerdem ist es denkbar, dass der Hohlleiter 7 nicht an seinen beiden Enden jeweils eine lösbare Verbindung 8, 9 aufweist, sondern nur an einem Ende die lösbare Verbindung aufweist, während er an seinem anderen Ende fest mit einer der Einheiten 1, 2 verbunden ist, oder an beiden Enden mit den Einheiten 1 und 2 fest verbunden ist, und an beliebiger Stelle dazwischen eine lösbare Verbindung aufweist.

## Patentansprüche

1. Funkübertragungseinrichtung, ausgebildet zum Übertragen von Signalen zwischen zwei Einheiten (1,2) über Funk, wobei jede Einheit (1, 2) jeweils eine Funkeinrichtung (3, 4) mit jeweils einer Antenne (5, 6) aufweist, wobei die Signale von der Antenne (5) der einen Einheit (1) ausgesendet und von der Antenne (6) der anderen Einheit (2) empfangen werden und/oder umgekehrt, **dadurch gekennzeichnet, dass** zwischen den beiden Einheiten (1, 2) ein Hohlleiter (7) vorgesehen ist, wobei die Antennen (5, 6) innerhalb des Hohlleiters (7) angeordnet sind und die Übertragung von der einen Antenne (5) und/oder der anderen Antenne (6) ausgesandten Signale innerhalb des Hohlleiters (7) erfolgt, wobei weiterhin der Hohlleiter (7) als flexibler Hohlleiter ausgebildet ist und der Hohlleiter (7) an zumindest einer Einheit (1, 2), vorzugsweise an beiden Einheiten (1, 2), oder an einer beliebigen Stelle zwischen den Einheiten(1, 2) über eine lösbare Verbindung (8, 9) befestigt ist.

2. Funkübertragungseinrichtung nach Anspruch 1, **dadurch gekennzeichnet, dass** die lösbare Verbindung (8, 9) eine Steck- oder Schraub- oder Rastverbindung ist.

3. Funkübertragungseinrichtung nach einem der Ansprüche 1 oder 2, **dadurch gekennzeichnet, dass** die Antennen (5, 6) jeweils an einem Ende innerhalb der Hohlleiters (7) angeordnet sind.

4. Funkübertragungseinrichtung nach einem der vorhergehenden Ansprüche, **dadurch gekennzeichnet, dass** der Hohlleiter (7) aus einem starren oder elastisch verformbaren Material mit einer Abschirmung besteht.

5. Funkübertragungseinrichtung nach Anspruch 4, **dadurch gekennzeichnet, dass** die Abschirmung eine metallische Beschichtung auf der äußeren oder inneren Oberfläche des Hohlleiters (7) oder eine Abschirmgeflecht ist.

6. Funkübertragungseinrichtung nach einem der vorhergehenden Ansprüche, **dadurch gekennzeichnet, dass** die Funkeinrichtungen (3, 4) in einer erhöhten Schutzklasse wie beispielsweise IP54, IP65, IP 67 oder ähnlich ausgeführt sind.

7. Funkübertragungseinrichtung nach einem der vorhergehenden Ansprüche, **dadurch gekennzeichnet, dass** die Funkübertragungseinrichtung zum Anschluss an Ethernet-Netze in den jeweiligen Einheiten (1, 2) angebunden ist.

8. Funkübertragungseinrichtung nach einem der vorhergehenden Ansprüche, **dadurch gekennzeichnet, dass** die beiden Einheiten (1, 2) mobile Einheiten sind.

9. Funkübertragungseinrichtung nach Anspruch 8, **dadurch gekennzeichnet, dass** die mobilen Einheiten zwei miteinander zu koppelnde Eisenbahnwaggons oder ein mit einer Lokomotive zu koppelnder Eisenbahnwaggon sind/ist.
